Europäisches Patentamt

European Patent Office

Office européen des brevets

(19)

(11) **EP 0 935 372 A2**

(12) **EUROPEAN PATENT APPLICATION**

(43) Date of publication:
**11.08.1999  Bulletin 1999/32**

(51) Int Cl.6: **H04L 25/03**

(21) Application number: **98310797.0**

(22) Date of filing: **30.12.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **31.12.1997  GB 9727510**

(71) Applicant: **Samsung Electronics Co., Ltd.**
**Suwon-city, Kyungki-do (KR)**

(72) Inventor: **Lee, Jae-Kon**
**Ahnyang-city, Kyungki-do (KR)**

(74) Representative: **Ellis, Kate, Dr. et al**
**Dibb Lupton Alsop,**
**Fountain Precinct**
**Balm Green, Sheffield S1 1RZ (GB)**

(54) **Adaptation of the number of states of a maximum likelihood sequence estimator**

(57)    A variable state number Viterbi equalizer is described. A channel impulse response estimator compares a system training sequence with a training sequence detected from received data to equalize the received data and estimate channel impulse responses. A state number decision circuit determines a threshold level, re-forms a channel impulse response with the channel impulse responses higher than the said threshold level and generates a state number $2^{(L-1)}$ according to a tap number L of such channel impulse responses. A plurality of Viterbi equalizing elements each having a different state number are provided and one of the Viterbi equalizing elements is selected according to the state number $2^{(L-1)}$, to perform a Viterbi algorithm for the received data according to the re-formed channel impulse response.

FIG.  4A

FIG. 4B

**Description**

BACKGROUND OF THE INVENTION

The present invention relates to a Viterbi equalizer having a variable state number for use in a digital radio communication system.

In general, a radio link includes multichannel frequencies which may be delayed due to reflection against obstacles such as buildings. Such multichannel frequencies cause interference and noise between internal symbols, thus decreasing service quality of the radio communication. In particular, in a digital TDMA (Time Division Multiple Access) radio communication system, noise due to the multichannel frequencies causes interference between internal symbols. Therefore, the digital radio communication system generally uses an equalization technique such as a Viterbi equalizer. Sometimes, the Viterbi equalizer is called a maximum likelihood sequence estimator (hereinafter referred to as MLSE), which is commonly used for GSM (Global Systems for Mobile Communication) or ISO (International Standard Organization)-54 digital radio communication systems by virtue of its reliable equalization.

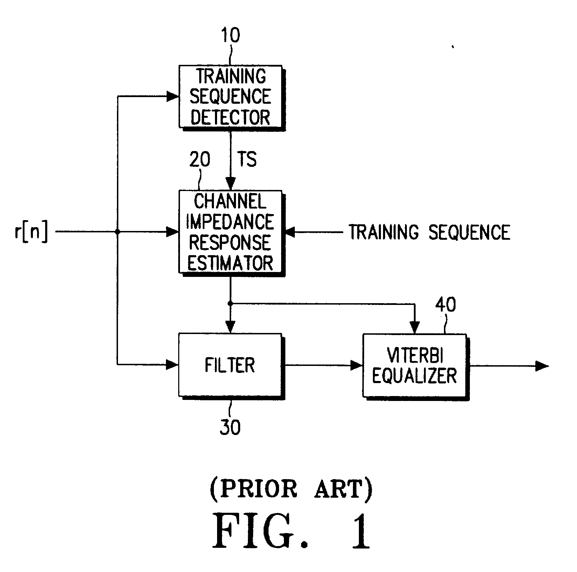

FIG. 1 is a block diagram of a Viterbi equalizer. In the drawing, a training sequence detector 10 detects a training sequence TS from received sequential data train r[n]. A channel impulse response estimator 20 synchronizes the received data train r[n] according to the detected training sequence TS and a system training sequence, in accordance with the following Equation (1):

$$Xcorr[n] = \frac{\sum_{K=0}^{N-1} TS[K].r[K-n]}{TSLength} \quad \dots\dots\dots\dots\dots\dots\dots\dots\dots\dots\dots (1)$$

where Xcorr[n] represents cross correlation. The cross correlation Xcorr[n] has the maximum energy when the training sequence TS detected from the received data train r[n] coincides with the system sequence generated internally from the system and a Viterbi equalizer 40 equalizes the received data by using the cross correlation.

Moreover, the channel impedance response estimator 20 synchronizes the multichannel frequencies generated by reflection, interference and diffraction and thereafter evaluates channel impulse response $h_n$ in accordance with the following Equation (2):

$$r[n] = \sum_{n=infinity}^{+infinity} h_n . X_{i-n} \quad \dots\dots\dots\dots\dots\dots\dots\dots\dots\dots\dots\dots\dots\dots\dots (2)$$

where r[n] represents the received data train, $h_n$ represents the channel impulse response and $X_{i-n}$ represents the training sequence. Further, the received data is sampled with a sampling period T.

A filter 30 consisting of an FIR (Finite Impulse Response) filter filters the received data r[n] according to the channel impulse response coefficient $h_n$ evaluated by Equation (2), to generate a distortion-free data train r[n]' (i.e., dispersive energy-compensated data train) . The Viterbi equalizer 40 corrects errors of the filtered data train r [n] ' by performing a Viterbi algorithm according to the channel impulse response coefficient $h_n$, to generate final equalization data.

Furthermore, the Viterbi equalizer 40 has a fixed state number of $2^{(K-1)}$, which is determined by a constraint length K. As the channels increase in number according to the state number, a channel memory (not shown) provided in the Viterbi equalizer 40 must increase in capacity, which results in an increase in the number of calculations.

Therefore, when the portable radio terminal includes a Viterbi equalizer having a fixed state number, the portable radio terminal consumes constant power regardless of the state of the channel, thus lowering power efficiency and wasting memory resources.

SUMMARY OF THE INVENTION

It is therefore an objective of the present invention to provide an improved Viterbi equalizer which addresses the above problems.

Accordingly, the present invention provides a variable state number Viterbi equalizer comprising:

a channel impulse response estimator for comparing a system training sequence with a training sequence detected from received data to equalize the received data and estimate channel impulse responses;
a state number decision circuit for determining a threshold level, re-forming a channel impulse response with the channel impulse responses higher than the said threshold level and generating a state number $2^{(L-1)}$ according to a tap number L of such channel impulse responses; and

a plurality of Viterbi equalizing elements each having a different state number and means for selecting one of the Viterbi equalizing elements according to the state number $2^{(L-1)}$, to perform a Viterbi algorithm for the received data according to the re-formed channel impulse response.

Preferably, the Viterbi equalizer further comprises a filter for filtering the received data according to the re-formed channel impulse response to remove noise.

Preferably, the state number decision circuit is adapted to determine the threshold value by multiplying the channel impulse response with the maximum power estimated by the channel impulse response estimator by a specified value.

The said specified value is preferably between 0 and 0.5.

The present invention also provides a method of controlling a variable state number Viterbi equalizer comprising:

estimating channel impulse responses for a plurality of channels;

determining a threshold level;

detecting those channel impulse responses which are higher than the said threshold level, calculating tap number of the detected channel impulse responses and determining the state number of the Viterbi equalizer using the tap number as a constraint length.

Preferably, the threshold level is determined by:

detecting a channel impulse response with a maximum power; and

multiplying a tap coefficient of that channel impulse response by a specified value to determine the threshold level.

BRIEF DESCRIPTION OF THE DRAWINGS

The present invention will now be described by way of example with reference to the accompanying drawings in which:

FIG. 1 is a block diagram of a common Viterbi equalizer apparatus;

FIGs. 2A and 2B are diagrams showing the burst frame format in a common GSM system;

FIG. 3 is a block diagram of a Viterbi equalizer apparatus having a variable state number according to the present invention;

FIG. 4A is a diagram showing a channel impulse response having a valid channel impulse response according to the present invention;

FIG. 4B is a diagram showing a channel impulse response re-formed by means of the valid channel impulse response of FIG. 4A; and

FIG. 5 is a block diagram of a Viterbi equalizer for calculating a variable state number according to the present invention.

DETAILED DESCRIPTION OF THE PREFERRED EMBODIMENT

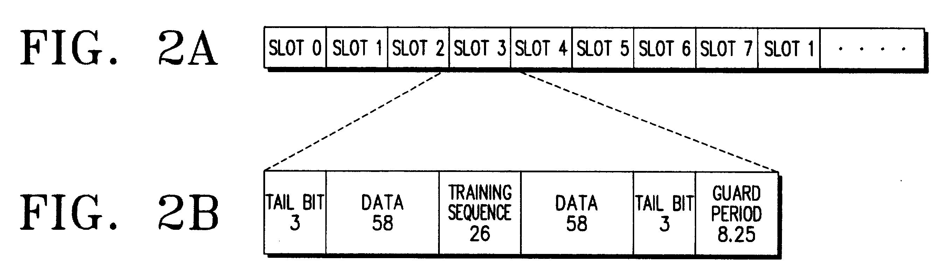

Commonly, a GSM system employs a burst transmission technique. The burst may be a normal burst, as shown in FIGs. 2A and 2B, used in a talking channel TCH, an access burst used in a random access channel RACH, an F burst used in a frequency correction channel or an S burst used in a synchronous channel.

FIG. 2A illustrates a frame format having 8 slots used in the normal burst and FIG. 2B illustrates a format of the slot. As illustrated in FIG. 2B, one slot consists of 156.25 bits, including a series of 3 tail bits, 58 data bits, 26 training sequence bits, 58 data bits, 3 tail bits and 8.25 guard period bits.

The tail bits at both ends of the slot consist of three $^2 0^2$ bits provided at beginning and end portions of each burst to allow the system to recognize the beginning and end of the slot. The two sets of 58-bits of data constitute information. The 26-bit training sequence positioned between the two 58-bit data are the sequence that the equalizer uses to reduce interference between the internal symbols. The training sequence is used for minimizing the maximum distance by using other useful bits and for separating the received signal and the interference signal. Furthermore, the training sequence is also used for synchronizing the received data.

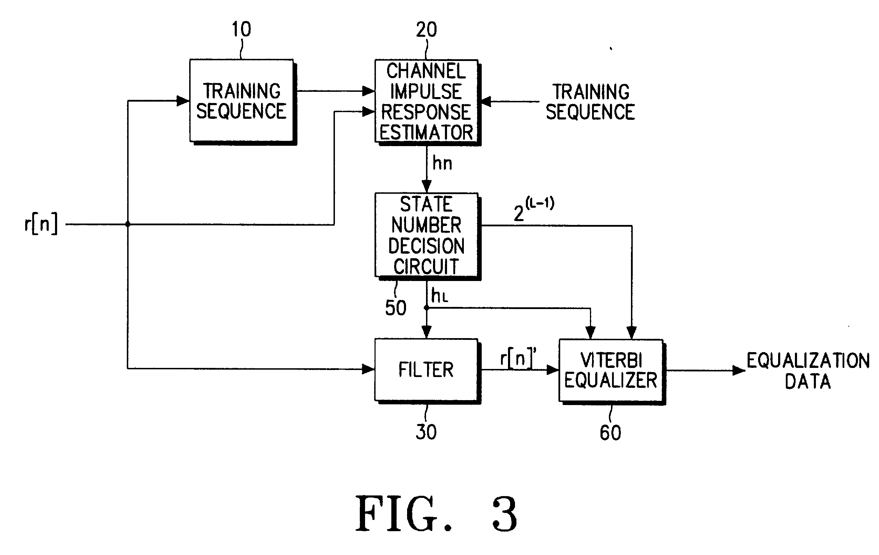

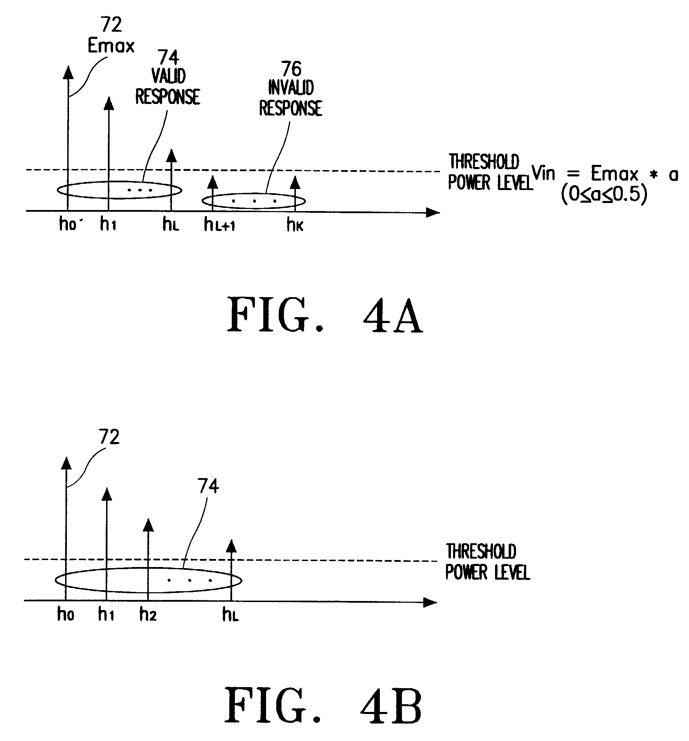

FIG. 3 is a block diagram of a Viterbi equalizer apparatus having a variable state number according to the present invention. In the drawing, a training sequence detector 10 detects the training sequence from the burst constituting the data train r[n]. A channel impulse response estimator 20 estimates the channel impulse response $h_n$ from the data train r[n]. A state number decision circuit 50 receives the channel impulse response $h_n$ generated from the channel impulse response estimator 20, to re-form a channel impulse response $h_L$ with valid channel impulse responses 74 only, in which the valid channel impulse responses 74 refer to the channel impulse responses having a power higher than a threshold level as shown in FIG. 4A.

The threshold level is determined in accordance with the following Equation (3):

$$Threshold = E_{max} \; x \; a \; (0<a<0.5) \tag{3}$$

where $E_{max}$ 72 represents a channel impulse response tap $h_0$ having the maximum energy level out of the channel impulse responses shown in FIG. 4A. Further, the state number decision circuit 50 generates a state number $2^{(L-1)}$ for the tap number L of the re-formed valid channel impulse responses. Here, the tap number L of the minimum channel impulse response is 2.

A filter 30 filters the received data train r[n] according to the re-formed channel impulse response $h_L$ from the state number decision circuit 50, to generate a filtered data train r[n]'. A Viterbi equalizer 60 performs a Viterbi algorithm for the data train r[n]' output from the filter 30 according to the re-formed channel impulse response $h_L$ and the state number $2^{(L-1)}$ generated from the state number decision circuit 50, thus generating the final equalization data.

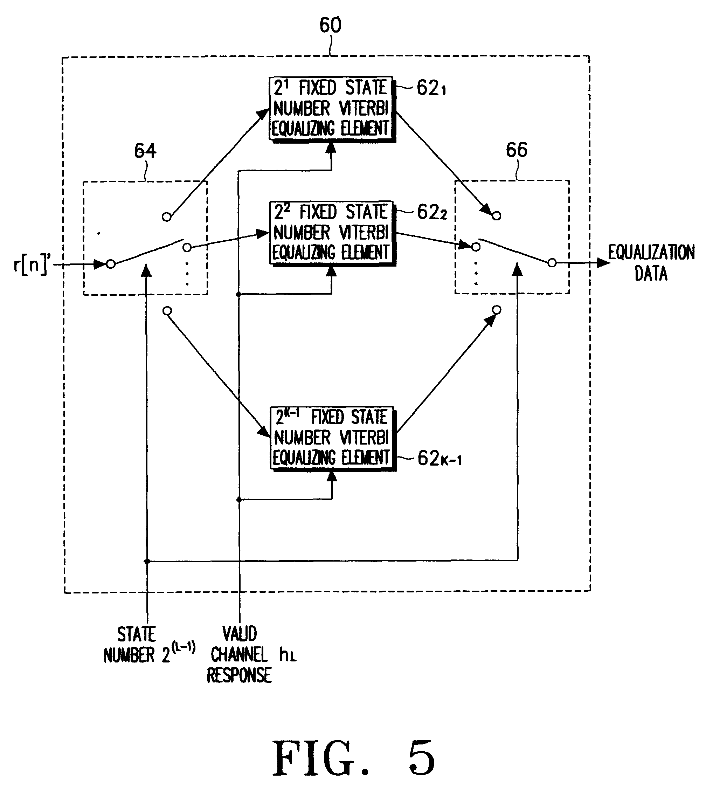

FIG. 5 is a block diagram of the Viterbi equalizer 60 for calculating the variable state number according to the present invention. In the drawing, if a variable range of the state number is $2^1,...,2^{(L-1)}$, the Viterbi equalizer 60 is composed of Viterbi equalizing elements $62_1$-$62_{K-1}$ with the constraint length K. Here, the constraint length K is identical to the valid channel impedance response L and the respective Viterbi equalizing elements $62_1$-$62_{K-1}$ have the state number fixed to $2^{(K-1)}$. The state number decision circuit 50 generates the state number $2^{(L-1)}$ to actuate switches 64 and 66 in the Viterbi equalizer 60 so as to apply the filtered data train r[n]' from the filter 30 to a selected one of the Viterbi equalizing elements $62_1$-$62_{K-1}$. The selected Viterbi equalizing element performs the Viterbi algorithm for the input data train r[n]' according to the re-formed channel impulse response $h_L$ generated from the state number decision circuit 50, so as to generate the final equalization signal.

As can be appreciated from the foregoing, the Viterbi equalizer according to the present invention controls the state number according to the channel state, so that the Viterbi equalizer may reduce number of calculations, thus enhancing efficiency. Further, the state number is reduced, which causes a decrease of the channel number, so that memory resources may be saved.

## Claims

1. A variable state number Viterbi equalizer comprising:

   a channel impulse response estimator 20 for comparing a system training sequence with a training sequence detected from received data to equalize the received data and estimate channel impulse responses;
   a state number decision circuit 50 for determining a threshold level, re-forming a channel impulse response with the channel impulse responses higher than the said threshold level and generating a state number $2^{(L-1)}$ according to a tap number L of such channel impulse responses; and
   a plurality of Viterbi equalizing elements $62_1$---$62_{k-1}$ each having a different state number and means for selecting one of the Viterbi equalizing elements $62_1$...$62_{k-1}$ according to the state number $2^{(L-1)}$, to perform a Viterbi algorithm for the received data according to the re-formed channel impulse response.

2. A variable state number Viterbi equalizer according to claim 1 further comprising a filter 30 for filtering the received data according to the re-formed channel impulse response to remove noise.

3. A variable state number Viterbi equalizer according to claim 1 or claim 2 in which the state number decision circuit is adapted to determine the threshold value by multiplying the channel impulse response with the maximum power estimated by the channel impulse response estimator by a specified value.

4. A variable state number Viterbi equalizer according to claim 3 in which the said specified value is between 0 and 0.5.

5. A method of controlling a variable state number Viterbi equalizer comprising:

estimating channel impulse responses for a plurality of channels;
determining a threshold level;
detecting those channel impulse responses which are higher than the said threshold level, calculating tap number of the detected channel impulse responses and determining the state number of the Viterbi equalizer using the tap number as a constraint length.

6. A method of controlling a variable state number Viterbi equalizer according to claim 5 in which the threshold level is determined by:

detecting a channel impulse response with a maximum power; and
multiplying a tap coefficient of that channel impulse response by a specified value to determine the threshold level.

7. A method of controlling a variable state number Viterbi equalizer according to claim 6 in which the said specified value is between 0 and 0.5.

8. A variable state number Viterbi equalizer as described with reference to and/or as illustrated in FIGs. 3 et seq. of the accompanying drawings.

9. A method of controlling a variable state number Viterbi equalizer as described with reference to and/or as illustrated in FIGs. 3 et seq. of the accompanying drawings.

r[n]

10 TRAINING SEQUENCE DETECTOR

TS

20 CHANNEL IMPEDANCE RESPONSE ESTIMATOR

TRAINING SEQUENCE

30 FILTER

40 VITERBI EQUALIZER

(PRIOR ART)
FIG. 1

EP 0 935 372 A2

FIG. 2A

| SLOT 0 | SLOT 1 | SLOT 2 | SLOT 3 | SLOT 4 | SLOT 5 | SLOT 6 | SLOT 7 | SLOT 1 | · · · · |
|--------|--------|--------|--------|--------|--------|--------|--------|--------|---------|

FIG. 2B

| TAIL BIT 3 | DATA 58 | TRAINING SEQUENCE 26 | DATA 58 | TAIL BIT 3 | GUARD PERIOD 8.25 |
|------------|---------|----------------------|---------|------------|-------------------|

FIG. 3

72
Emax

74
VALID
RESPONSE

76
INVALID
RESPONSE

THRESHOLD
POWER LEVEL $Vin = Emax * a$
$(0 \leq a \leq 0.5)$

$h_0$ $h_1$ $h_L$ $h_{L+1}$ $h_K$

# FIG. 4A

72

74

THRESHOLD
POWER LEVEL

$h_0$ $h_1$ $h_2$ $h_L$

# FIG. 4B

60

2¹ FIXED STATE
NUMBER VITERBI
EQUALIZING ELEMENT — 62₁

64

66

2² FIXED STATE
NUMBER VITERBI
EQUALIZING ELEMENT — 62₂

r[n]'

EQUALIZATION
DATA

2ᴷ⁻¹ FIXED STATE
NUMBER VITERBI
EQUALIZING ELEMENT — 62ₖ₋₁

STATE
NUMBER 2⁽ᴸ⁻¹⁾

VALID
CHANNEL hₗ
RESPONSE

# FIG. 5